Europäisches Patentamt

European Patent Office

Office européen des brevets

(19)

(11) Numéro de publication: **0 041 437**
**B1**

(12) **FASCICULE DE BREVET EUROPEEN**

(45) Date de publication du fascicule du brevet: **22.02.84**

(51) Int. Cl.³: **G 06 J 1/00**

(21) Numéro de dépôt: **81400824.9**

(22) Date de dépôt: **22.05.81**

(54) Procédé et dispositif pour la dérivation d'un signal électrique analogique.

(30) Priorité: **04.06.80 FR 8012381**

(43) Date de publication de la demande:
**09.12.81 Bulletin 81/49**

(45) Mention de la délivrance du brevet:
**22.02.84 Bulletin 84/8**

(84) Etats contractants désignés:
**BE CH DE GB IT LI NL SE**

(56) Documents cités:
**US - A - 4 071 901**

**MESURES-REGULATION-AUTOMATISME, vol. 43, no. 11, novembre 1978 PARIS (FR) H. LANTERI: "Differentiation numérique d'un signal lentement variable", pages 69-71**

(73) Titulaire: **Société Nationale Industrielle Aérospatiale Société anonyme dite: 37 Bld de Montmorency F-75016 Paris (FR)**

(72) Inventeur: **Ricaud, Pierre 23, Allée du Château F-31770 Colomiers (FR)**

(74) Mandataire: **Bonnetat, Christian et al, Cabinet PROPI Conseils 23 rue de Léningrad F-75008 Paris (FR)**

Courier Press, Leamington Spa, England.

Procédé et dispositif pour la dérivation d'un signal électrique analogique.

La présente invention concerne un procédé et un dispositif pour l'obtention de la dérivée d'un signal électrique analogique variant lentement en fonction d'un paramètre.

Dans la présente description et comme on le verra par la suite, l'adverbe "lentement" est à rapprocher de la vitesse de traitement des éléments électroniques composant le dispositif l'invention.

L'invention s'applique tout particulièrement, quoique non exclusivement, au calcul très précis des vitesses verticales de cabines d'avion, en vue de réaliser leur régulation en variation de pression, ou après correction, en vitesse ascensionnelle ou descensionnelle.

Le dispositif selon l'invention convient donc notamment au traitement des signaux issus de capteurs de pression barométrique, c'est-à-dire de . .transducteurs pressionsignal électrique analogique.

Il constitue donc plus précisément un variomètre de haute précision.

Dans la technique actuelle sont connus des dispositifs variométriques pneumatiques et électroniques.

Les premiers ne fournissent pas d'information exploitable pour des variations lentes de pression et sont surtout utilisés comme indicateurs de vol, notamment dans les aéronefs de conception simple.

Les seconds utilisent des transducteurs pressionsignal électrique analogique et ledit signal est dérive à l'aide d'un circuit R.C. et d'un amplificateur pour fournir un signal de vitesse verticale. La précision du signal fourni est insuffisante pour indiquer des variations lentes destinées à être exploitées pour la régulation de pression interne d'une cabine d'aéronef pressurisée.

La présente invention pallie ces inconvénients grâce à une combinaison de technologie numérique et de technologie analogique permettant d'obtenir une résolution très élevée.

On remarquera que, dans la revue MESURES-REGULATION-AUTOMATISME vol. 43, no. 11, novembre 1978, Paris (FR) l'article de H. LANTERI: "Différentiation numérique d'un signal lentement variable", pages 69—71 décrit une méthode et un dispositif électronique pour obtenir la dérivée d'une fonction Y(t). Cette méthode "consiste à effectuer des mesures de la valeur de Y(t) à des intervalles de temps égaux et de déterminer la valeur approchée de la dérivée aux instants successifs par l'expression centrée:

$$\left[ \frac{\Delta Y}{\Delta t} \right]_t = \frac{Y_{t+\Delta t/2} - Y_{t-\Delta t/2}}{\Delta t}$$

Afin de mettre en oeuvre cette méthode, le dispositif électronique correspondant comporte des moyens d'échantillonnage et de conversion analogique-numérique du signal d'entrée Y(t), des moyens de prise en mémoire de plusieurs valeurs successives de Y(t) sous forme binaire, des moyens de calcul de $\Delta Y$ et des moyens de conversion numérique-analogique fournissant une tension de sortie proportionnelle à la valeur de la dérivée.

La présente invention met en oeuvre un procédé et un dispositif différents.

A cette fin, selon l'invention, le procédé pour l'obtention de la dérivée d'un signal électrique analogique P variant lentement en fonction d'une variable $t$, par la mise en oeuvre d'un dispositif de calcul numérique comportant des moyens de conversion analogique-numérique dudit signal P, des moyens de mise en mémoire de plusieurs valeurs successives dudit signal P et des moyens de calcul de différences entre des valeurs différentes dudit signal P, est remarquable en ce que l'on convertit une première valeur analogique $P_1$ que prend ledit signal P pour une première valeur $t_1$ de la variable $t$ en une première valeur numérique, dont on mémorise durablement au moins les bits de poids le plus élevé que l'on reconvertit en permanence en une valeur analogique $P_{12}$, et l'on forme une première différence analogique $\delta P = P_1 - P_{12}$, qui est ensuite convertie en une seconde valeur numérique que l'on mémorise également, après quoi, on compare une seconde valeur analogique $P_2$ que prend ledit signal P pour une seconde valeur $t_2$ de la variable $t$ et ladite valeur analogique $P_{12}$, pour former une seconde différence analogique $P_2 - P_{12}$ que l'on convertit en une troisième valeur numérique, puis on soustrait ladite seconde valeur numérique de cette troisième valeur numérique, de façon à former la valeur numérique d'une troisième différence $\Delta P = P_2 - P_1$ et l'on divise la valeur numérique de cette troisième différence par la valeur numérique de la différence $\Delta t = t_2 - t_1$ des valeurs $t_2$ et $t_1$ de ladite variable $t$.

On obtient ainsi, sous forme numérique, le rapport.

$$\frac{\Delta P}{\Delta t} = \frac{P_2 - P_1}{t_2 - t_1}$$

Avantageusement, afin d'obtenir une résolution élevée, la formation desdites première et seconde différences analogiques s'accompagne d'une amplification de gain élevé.

Etant donné que la valeur analogique reconvertie $P_{12}$ s'élimine d'elle-même dans le calcul, il n'est pas indispensable qu'elle soit absolument égale à $P_1$.

Dans ces conditions, il est suffisant que la valeur analogique $P_{12}$ soit obtenue par conver-

sion numérique-analogique des bits de poids le plus élevé dudit premier code numérique représentatif de la valeur analogique $P_1$.

Comme on le verra par la suite, la première différence $\delta P = P_1 - P_{12}$ correspond pratiquement à l'erreur introduite par le dispositif de mise en oeuvre de l'invention dans la valeur de P par la double conversion et la mise en mémoire intermédaire.

Bien entendu, la suite des différentes opérations peut être répétée en permanence, pour donner de façon continue le rapport.

$$\frac{\Delta P}{\Delta t}$$

L'invention peut être mise en oeuvre pour l'obtention de la dérivée de n'importe quel signal électrique analogique P, fonction de n'importe quelle variable $t$. Toutefois, dans une application particulièrement intéressante de l'invention, mentionnée ci-dessus, il est avantageux que le signal électrique analogique P soit représentatif de la pression à l'extérieur ou à l'intérieur d'un áeronef en fonction de l'altitude de ce dernier, cette altitude étant elle-même une fonction du temps $t$.

Un dispositif pour la mise en oeuvre de l'invention est associé à un générateur du signal électrique analogique P et comprend des moyens de conversion analogique-numérique dudit signal P, des moyens de mise en mémoire de plusieurs valeurs successives dudit signal P et des moyens de calcul de différences entre des valeurs différentes dudit signal P, et est remarquable en ce qu'il comporte un multiplexeur à deux entrées et à sortie unique pourvu de moyens de liaison commandée entre chacune desdites entrées et ladite sortie, l'une desdites entrées du multiplexeur recevant le signal P dudit générateur; un comparateur dont la sortie est reliée à l'autre entrée dudit multiplexeur et dont une entrée reçoit également le signal P provenant du générateur; un convertisseur analogique-numérique dont l'entrée est reliée à la sortie dudit multiplexeur; une première mémoire destinée à recevoir dudit convertisseur analogique-numérique au moins les bits de poids le plus élevé de la première valeur numérique représentative de la valeur analogique $P_1$; un convertisseur numérique-analogique qui est en liaison permanente avec ladite première mémoire et dont la sortie est réunie à l'autre entrée dudit comparateur; une seconde mémoire destinée à recevoir dudit convertisseur analogique-numérique ladite seconde valeur numérique représentative de ladite première différence $\delta P = P_1 - P_{12}$ et des moyens de commande, d'horloge et de calcul destinés à commander de façon sélective lesdits moyens de liaison commandée du multiplexeur, à diriger ladite première valeur numérique vers ladite première mémoire, à diriger ladite seconde valeur numérique vers ladite seconde mémoire, à soustraire ladite seconde valeur numérique de la troisième différence $\Delta P = P2 - P1$, à former la valeur numérique de la différence $\Delta t = t2 - t1$ et à diviser les valeurs numériques de $\Delta P$ et $\Delta t$.

Ledit comparateur est avantageusement formé par un amplificateur différentiel à gain élevé, déterminé par la valeur de deux résistances dont l'une est montée entre l'entrée, reliée au convertisseur numérique analogique, et la sortie dudit amplificateur différentiel, tandis que l'autre desdites résistances est montée dans la liaison entre ledit convertisseur numérique-analogique et ledit amplificateur différentiel.

Les figures du dessin annexé feront bien comprendre comment l'invention peut être réalisée.

La figure 1 est un schéma temporel destiné à illustrer le fonctionnement du dispositif selon. l'invention.

La figure 2 est le schéma synoptique d'un exemple de réalisation du dispositif selon l'invention.

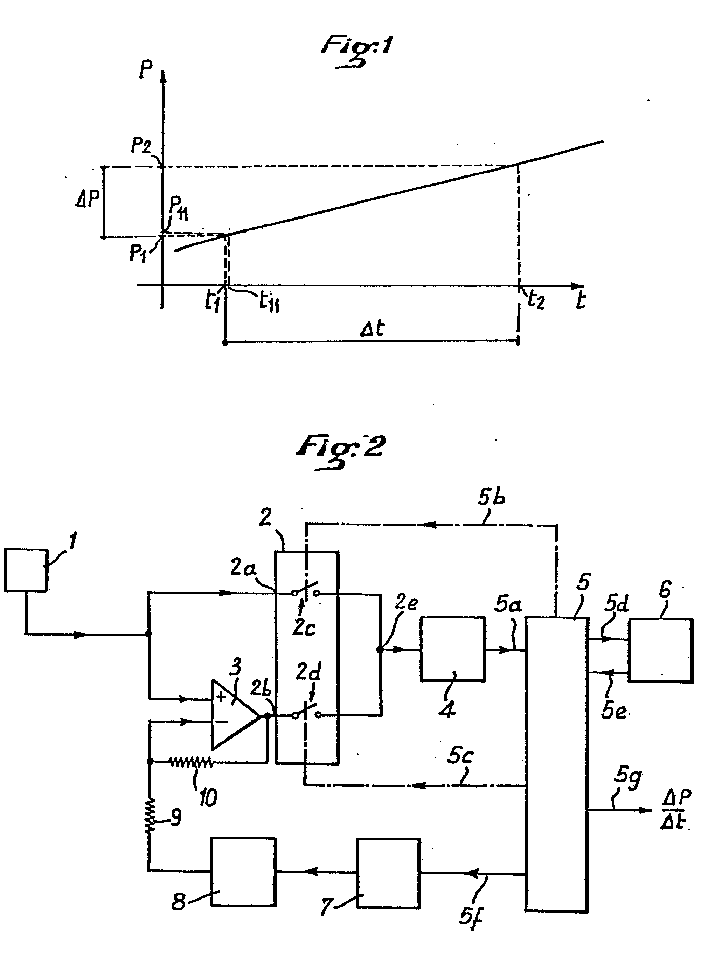

Le dispositif selon l'invention, montré par la figure 2, comporte un capteur-transducteur 1, susceptible de délivrer un signal électrique analogique P, représentatif d'une pression, par exemple une pression atmosphérique variant en fonction de l'altitude de 0 à 3000 m. Le signal P varie par exemple de 10 millivolts par millibar et, par exemple, la pression varie de un millibar par seconde.

Le dispositif de la figure 2 est par exemple monté à bord d'un aéronef. Ainsi, lorsque à l'instant $t_1$, l'aéronef se trouve à une certaine altitude $A_1$, le signal P fourni par le capteur 1 présente la valeur $P_1$, tandis qu'à l'instant $t_2$, lorsque l'aéronef se trouve à une autre altitude $A_2$, le signal P prend une valeur différente $P_2$. Ceci est montré sur la figure 1, qui illustre la variation du signal P en fonction du temps $t$.

La sortie du capteur 1 est reliée en parallèle, d'une part, à une première entrée $2a$ d'un circuit multiplexeur 2 et, d'autre part, à l'entrée positive d'un amplificateur différentiel 3, dont le gain est par exemple égal à 256, soit $2^8$. Sur la figure 2, le multiplexeur 2 est schématisé comme comportant deux interrupteurs $2c$ et $2d$ en parallèle l'un sur l'autre et respectivement en série entre deux entrées $2a$ et $2b$ du multiplexeur 2 et la sortie unique $2e$ de celui-ci.

La sortie de l'amplificateur différentiel 3 est reliée à l'entrée $2b$ du multiplexeur 2, tandis que la sortie $2e$ de cer dernier est réunie à un convertisseur analogique-numérique 4, par exemple à 12 bits, dont la sortie est connectée par une liaison $5a$ à un microprocesseur 5, par des liaisons $5b$ et $5c$, le microprocesseur 5 est apte à commander les interrupteurs $2c$ et $2d$.

Par d'autres liaisons $5d$ et $5e$, le microprocesseur 5 est en liaison avec une mémoire 6.

De plus, une autre mémoire 7 est reliée au microprocesseur 5 par une liaison $5f$. La sortie de la mémoire 7 est reliée à un convertisseur numérique-analogique, par exemple à 8 bits, dont la sortie est reliée à l'entrée négative de l'amplificateur différentiel 3 par une résistance 9.

Par ailleurs, une résistance 10 est montée entre la sortie et l'entrée négative de l'amplificateur différentiel 3. Ainsi, les résistances 9 et 10 permettent de déterminer le gain de l'amplificateur différentiel 3.

Le processus de fonctionnement du dispositif selon l'invention comprends trois séquences successives et respectivement répétitives, commandées par les moyens d'horloge et de comptage du microprocesseur 5.

La première séquence de fonctionnement se produit à l'instant $t_1$, et, à ce moment, le microprocesseur ferme l'interrupteur 2c et ouvre l'interrupteur 2d (grâce aux liaisons 5b et 5c), de sorte que la valeur $P_1$ est transférée directement au convertisseur 4, qui le numérise avec une résolution de 12 bits et transmet au microprocesseur 5 la valeur numérique correspondante.

Ce microprocesseur sélectionne les huit bits de poids le plus élevé de cette valeur numérique à 12 bits représentative de la valeur $P_1$ et les transfère, par la liaison 5f, dans la mémoire 7, où ils restent emmagasinés jusqu'à la fin du processus.

Le convertisseur numérique-analogique 8 transforme ces huit bits en une valeur analogique $P_{12}$, appliquée sur l'entrée négative de l'amplificateur différentiel 3, par l'intermédiaire de la résistance 9. Grâce à la mémoire 7, la valeur analogique $P_{12}$ reste en permanence jusqu'à la fin du processus, sur la sortie du convertisseur 8.

Cette première séquence est suffisamment rapide et la variation du signal P est suffisamment lente pour que l'on puisse considérer que, pendant son déroulement ledit signal P n'a pas évolué, c'est-à-dire qu'à l'instant $t_{11}$ auquel cette première séquence se termine, la valeur $P_{11}$ correspondante est pratiquement égale à $P_1$. De ce fait, le signal de différence $\delta P$ qui apparaît à l'instant $t_{11}$ à la sortie de l'amplificateur 3 et qui est égal à $\delta P = P_{11} - P_{12}$, est pratiquement égale à

$$\delta P = P_1 - P_{12}.$$

Dans ces conditions, $\delta P$ représente l'erreur introduite par le dispositif sur la valeur $P_1$ et due à la double conversion (par les convertisseurs 4 et 8) et par la mise en mémoire intermédiaire (dans la mémoire 7).

Dans la seconde séquence du processus (à l'instant $t_{11}$), le microprocesseur 5 ouvre l'interrupteur 2c et ferme l'interrupteur 2d, de sorte que le signal de différence $\delta P$ est transmis au convertisseur 4 qui le numérise, après quoi ledit microprocesseur 5 entre dans la mémoire 6 (par la liaison 5d) la valeur à 12 bits représentative de $\delta P$. Ensuite, le microprocesseur 5 ouvre l'interrupteur 2d, l'interrupteur 2c restant également ouvert.

Les interrupteurs 2d et 2c sont ainsi maintenus ouverts pendant un espace de temps $\Delta t$, par exemple égal à 1 seconde, menant à l'instant $t_2$.

A la fin de l'espace de temps $\Delta t$, c'est-à-dire à l'instant $t_2$, commence la troisième séquence, la microprocesseur 5 fermant alors l'interrupteur 2d. A l'instant $t_2$, l'entrée positive de l'amplificateur différentiel 3 reçoit, du capteur 1, la valeur $P_2$, tandis que l'entrée négative dudit amplificateur reçoit toujours la valeur $P_{12}$ du convertisseur 8. A la sortie de l'amplificateur différentiel 3 apparaît donc la différence $P_2 - P_{12}$, qui est numérisée par le convertisseur 4, puis transmise au microprocesseur 5.

Ce dernier appelle alors le signal de différence $\delta P$ de la mémoire 6 (par la liaison 5e) et retranche celui-ci de la différence $P_2 - P_{12}$, de sorte qu'il forme la valeur

$$P_2 - P_{12} - \delta P = P_2 - P_{12} - (P_1 - P_{12}) = P_2 - P_1 = \Delta P.$$

Ainsi, à sa sortie 5g, le microprocesseur peut fournir le rapport

$$\frac{\Delta P}{\Delta t},$$

c'est-à-dire la vitesse de variation de la pression P en fonction du temps $t$.

Après un délai delecture du signal

$$\frac{\Delta P}{\Delta t}$$

à la sortie 5g, les mémoires 6 et 7 et les convertisseurs 4 et 8 sont remis à zéro. L'interrupteur 2d est ouvert et l'interrupteur 2c est fermé et un nouveau cycle peut recommencer.

On remarquera que, quoique n'utilisant qu'un convertisseur analogique-numérique de 12 bits, on obtient sur le rapport

$$\frac{\Delta P}{\Delta t}$$

une résolution relative de 20 bits, si les dérives cumulées de l'amplificateur différentiel 3 et du convertisseur numérique-analogique 8 sont inférieures pendant $\Delta t$ à la valeur du 20ème bit de l'amplitude maximale numérisée de P, ce qui est parfaitement possible. Cette résolution relative est due à l'amplification par $2^8$ $(=256)$ des signaux de différence, par rapport à la mesure directe de P.

En effet, la variation de pression maximale étant de l'ordre de 1 millibar par seconde, $\Delta P$ sera toujours inférieur à la $256^{ème}$ partie de $P$, compte tenu du fait que $\Delta t$ est de l'ordre de 1 seconde. On aura donc, après $\Delta t$, à l'entrée de l'amplificateur 3, deux signaux dont la différence est inférieure ou de l'ordre de

$$\frac{P}{256}$$

avec une résolution de 8 bits pour le signal appliqué à l'entrée négative, donc avec une signification sur la 256$^{\text{ème}}$ partie dudit signal.

Or, la multiplication par 256 ($2^8$) de cette différence, effectuée par l'amplificateur 3, ramène la valeur analogique du signal de différence au niveau de la valeur du signal analogique représentatif de P et issue du détecteur 1.

Sur cette différence analogique, on obtient une signification sur la 4096$^{\text{ème}}$ partie, du fait de la conversion analogique-numérique à 12 bits effectuée par le convertisseur 4, ladite conversion étant rendue possible sur toute l'échelle dudit convertisseur, par l'amplification par 256. On obtient donc une signification sur la $256 \times 4096 = 1.048.576^{\text{ème}}$ partie ($2^{20}$) de P, c'est-à-dire une signification sur la variation $\Delta P$ correspondant au vingtième bit de P, avec un décalage sensiblement fixe ou erreur fixe (qui de toute façon est prise en compte pour former le signal d'erreur du circuit) portant notamment sur les quatre bits de poids le plus faible de la conversion numérique-analogique de la première séquence du procédé selon l'invention.

## Revendications

1. Procédé pour l'obtention de la dérivée d'un signal électrique analogique P variant lentement en fonction d'une variable $t$, par la mise en oeuvre d'un dispositif de calcul numérique comportant des moyens de conversion analogique-numérique dudit signal P, des moyens de mise en mémoire de plusieurs valeurs successives dudit signal P et des moyens de calcul de différences entre des valeurs différentes dudit signal P, caractérisé en ce que l'on convertit une première valeur analogique $P_1$ que prend le signal P pour une première valeur $t_1$ de la variable $t$ en une première valeur numérique, dont on mémorise durablement, au moins les bits de poids le plus élevé que l'on reconvertit en permanence en une valeur analogique $P_{12}$, et l'on forme une première différence analogique $\delta P = P_1 - P_{12}$, qui est ensuite convertie en une seconde valeur numérique que l'on mémorise également, après quoi on compare une seconde valeur analogique $P_2$ que prend ledit signal P pour une seconde valeur $t_3$ de la variable $t$ et ladite valeur analogique $P_{12}$, pour former une seconde différence analogique $P_2 - P_{12}$ que l'on convertit en une troisième valeur numérique, puis on soustrait ladite seconde valeur numérique de cette troisième valeur numérique, de façon à former la valeur numérique d'une troisième différence $\Delta P = P_2 - P_1$ et l'on divise la valeur numérique de cette troisième différence par la valeur numérique de la différence $\Delta t = t_2 - t_1$ des valeurs $t_2$ et $t_1$ de ladite variable $t$.

2. Procédé selon la revendication 1, caractérisé en ce que la formation desdites première et seconde différences analogiques s'accompagne d'une amplification de gain élevé.

3. Procédé selon l'une quelconque des revendications 1 ou 2, caractérisé en ce que la suite des différentes opérations est répétée en permanence, pour donner de façon continue le rapport

$$\frac{\Delta P}{\Delta t}.$$

4. Procédé selon l'une quelconque des revendications 1 à 3, caractérisé en ce que le signal électrique analogique P est représentatif de la pression à l'extérieur ou à l'intérieur d'un aéronef en fonction de l'altitude de ce dernier, cette altitude étant elle-même une fonction du temps $t$.

5. Dispositif pour la mise en oeuvre du procédé spécifié sous l'une quelconque des revendications 1 à 4, associé à un générateur (1) du signal électrique analogique P, et comprenant des moyens de conversion analogique-numérique dudit signal P, des moyens de mise en mémoire de plusieurs valeurs successives dudit signal P et des moyens de calcul de différence entre des valeurs différentes dudit signal P, caractérisé en ce qu'il comporte un multiplexeur (2) à deux entrées et à sortie unique pourvu de moyens (2c, 2d) de liaison commandée entre chacune desdites entrées (2a, 2b) et ladite sortie (2e), l'une desdites entrées (2a) du multiplexeur (2) recevant le signal P dudit générateur (1); un comparateur (3) dont la sortie est reliée à l'autre entrée (2b) dudit multiplexeur (2) et dont une entrée reçoit également le signal P provenant du générateur (1); un convertisseur analogique-numérique (4) dont l'entrée est reliée à la sortie (2e) dudit multiplexeur (2); une première mémoire (7) destinée à recevoir dudit convertisseur analogique-numérique (4) au moins les bits de poids le plus élevé de la première valeur numérique représentative de la valeur analogique $P_1$; un convertisseur numérique-analogique (8) qui est en liaison permanente avec ladite première mémoire (7) et dont la sortie est réunie à l'autre entrée dudit comparateur (3); une seconde mémoire (6) destinée à recevoir dudit convertisseur analogique-numérique (4) ladite seconde valeur numérique représentative de ladite première différence $\delta P = P_1 - P_{12}$ et des moyens de commande d'horloge et de calcul (5) destinés à commander de façon sélective lesdits moyens de liaison commandée du multiplexeur (2), à diriger ladite première valeur numérique vers ladite première mémoire (7), à diriger ladite seconde valeur numérique vers ladite seconde mémoire (6), à soustraire ladite seconde valeur numérique de la troisième pour former la valeur numérique de la troisième différence $\Delta P = P_2 - P_1$, à former la valeur numérique de la différence $\Delta t = t_2 - t_1$ et à diviser les valeurs numériques de $\Delta P$ et $\Delta t$.

6. Dispositif selon la revendication 5, caractérisé en ce que ledit comparateur (3) est formé par un amplificateur différentiel à gain élevé, déterminé par la valeur de deux résistances (9, 10) dont l'une (10) est montée entre l'entrée, reliée au convertisseur numérique-analogique (8), et la sortie dudit amplificateur différentiel (3), tandis que l'autre (9) desdites résistances est montée dans la liaison entre ledit convertisseur numérique-analogique (8) et ledit amplificateur différentiel (3).

7. Dispositif selon l'une des revendications 5 ou 6, caractérisé en ce que le convertisseur analogique-numérique (4) présente une plus grande résolution que le convertisseur numérique-analogique (8).

8. Dispositif selon l'une quelconque des revendications 5 à 7, caractérisé en ce que lesdits moyens de commande, d'horloge et de calcul sont constitués par un microprocesseur (5).

9. Variomètre de précision, caractérisé en ce qu'il comporte, d'une part, un capteur de pression barométrique susceptible de convertir celle-ci en un signal électrique analogique et, d'autre part, un dispositif tel que spécifié sous l'une quelconque des revendications 5 à 8.

**Patentansprüche**

1. Verfahren zur Erlangung der Ableitung eines analogen elektrischen Signals P, das langsam in Abhängigkeit von einer Veränderlichen $t$ variiert, durch Betreiben einer numerischen Recheneinheit bestehend aus einem analog-numerischen Wandler des Signals P, einer Einrichtung zum Speichern mehrerer sukzessiver Werte des Signals P und einer Einrichtung zum Berechnen der Differenzen unter den verschiedenen Werten des Signals P, dadurch gekennzeichnet, daß ein erster analoger Wert $P_1$, den das Signal P für einen ersten Wert $t_1$ der Veränderlichen $t$ nimmt, in einen ersten numerischen Wert umgewandelt wird, von dem zumindest die am höchsten liegenden Gewichtsbits dauerhaft gespeichert werden, die beständig in einen analogen Wert $P_{12}$ umgewandelt werden, und daß eine erste analoge Differenz $\delta P = P_1 - P_{12}$ gebildet wird, die darauf in einen zweiten numerischen Wert umgewandelt wird, der ebenfalls gespeichert wird, wonach ein zweiter analoger Wert $P_2$, den das Signal P für einen zweiten Wert $t_2$ der Veränderlichen $t$ nimmt, und der analoge Wert $P_{12}$ verglichen werden, um eine zweite analoge Differenz $P_2 - P_{12}$ zu bilden, die in einen dritten numerischen Wert umgewandelt wird, worauf der zweite numerische Wert von dem dritten numerischen Wert abgezogen wird, so daß der numerische Wert einer dritten Differenz $\Delta P = P_2 - P_1$ gebildet und der numerische Wert der dritten Differenz durch den numerischen Wert der Differenz $\Delta t = t_2 - t_1$ der Werte $t_2$ und $t_1$ der Veränderlichen $t$ geteilt wird.

2. Verfahren nach Anspruch 1, dadurch gekennzeichnet, daß das Bilden der ersten und zweiten analogen Differenz von einer erhöhten Verstärkung begleitet wird.

3. Verfahren nach einem der vorhergehenden Ansprüche 1 oder 2, dadurch gekennzeichnet, daß die Folge der verschiedenen Operationen auf Dauer wiederholt wird, um kontinuierlich die Beziehung

$$\frac{\Delta P}{\Delta t}$$

zu liefern.

4. Verfahren nach einem der Ansprüche 1 bis 3, dadurch gekennzeichnet, daß das analoge elektrische Signal P stellvertretend für den Druck außerhalb oder innerhalb eines Flugzeuges in Abhängigkeit von dessen Höhe steht, wobei diese Höhe ihrerseits Funktion der Zeit $t$ ist.

5. Vorrichtung zur Durchführung des in den Ansprüchen 1 bis 4 angegebenen Verfahrens, die einem Geber (1) des analogen elektrischen Signals zugeordnet ist und Mittel zum analog-numerischen Umwandeln des Signals P, Mittel zum Speichern mehrerer sukzessiver Werte des Signals P und eine Einrichtung umfasst, durch die die Differenz unter den verschiedenen Werten des Signals P errechnet wird, gekennzeichnet durch einen Multiplexer (2) mit zwei Eingängen und einem einzigen Ausgang mit den Schaltverbindungen (2c, 2d), die zwischen jedem der Eingänge (2a, 2b) und dem Ausgang (2e) liegen, wobei einer der Eingänge (2a) des Multiplexers (2) das Signal P des Gebers (1) empfängt; einen Komparator (3), dessen Ausgang am anderen Eingang (2b) des Multiplexers (2) liegt und dessen einer Eingang ebenfalls das vom Geber (1) stammende Signal P empfängt; einen analog-numerischen Wandler (4), dessen Eingang am Ausgang (2e) des Multiplexers (2) liegt; einen ersten Speicher (7, der vom analog-numerischen Wandler zumindest die höchsten Gewichtsbits des ersten, den analogen Wert $P_1$ darstellenden numerischen Wert zu empfangen bestimmt ist; einen numerisch-analogen Wandler (8), der mit dem ersten Speicher (7) permanent verbunden ist und dessen Ausgang am anderen Eingang des Komparators (3) liegt; einen zweiten Speicher (6), der vom analog-numerischen Wandler den zweiten, die erste Differenz $\delta P = P_1 - P_{12}$ darstellenden numerischen Wert zu empfangen bestimmt ist; und durch eine Steuer-, Zeitgeber- und Recheneinheit (5), die dazu dient, die Schaltverbindungen des Multiplexers (2) selektiv zu steuern, den ersten numerischen Wert dem ersten Speicher (7) zuzuführen, den zweiten numerischen Wert dem zweiten Speicher (6) zuzuführen, den zweiten numerischen Wert vom dritten abzuziehen, um einen numerischen Wert der dritten Differenz $\Delta P = P_2 - P_1$ zu bilden, den numerischen Wert der Differenz $\Delta t = t_2 - t_1$ zu bilden und die numerischen Wert von $\Delta P$ und $\Delta t$ zu teilen.

6. Vorrichtung nach Anspruch 5, dadurch gekennzeichnet, daß der Komparator (3) gebildet ist aus einem Differentialverstärker mit erhöhtem Verstärkungsgrad nach Maßgabe durch den Wert der beiden Widerstände (9, 10), von denen der eine (10) zwischen den am numerisch-analogen Wandler (8) liegenden Eingang und dem Ausgang des Differentialverstärkers (3) und der andere auf der Verbindung zwischen dem numerischanalogen Wandler (8) und dem Differentialverstärker (3) angeordnet ist.

7. Vorrichtung nach einem der Ansprüche 5 oder 6, dadurch gekennzeichnet, daß der analog-numerische Wandler (4) eine höhere Auflösung liefert als der numerisch-analoge Wandler (8).

8. Vorrichtung nach einem der Ansprüche 5 bis 7, dadurch gekennzeichnet, daß die Steuer-, Zeitgeber- und Recheneinheit aus Mikroprozessoren gebildet ist.

9. Präzisionsvariometer, gekennzeichnet durch einerseits einen Meßfühler für barometrischen Druck, der vom Meßfühler in ein analoges elektrisches Signal umwandelbar ist, und andererseits eine Vorrichtung nach den in den Ansprüchen 5 bis 8 gemachten Angaben.

## Claims

1. Process for obtaining the derivative of an analog electric signal P varying slowly as a function of a variable $t$, by carrying out a digital calculating device comprising analog-to-digital means for converting signal P, means for storing several successive values of said signal P and means for calculating the difference between different values of said signal P, characterized in that a first analog value $P_1$ taken by the signal P for a first value $t_1$ of the variable $t$ is converted into a first digital value, of which at least the most significant bits are durably memorised and permanently reconverted into an analog value $P_{12}$ and it is formed a first analog difference $\delta P = P_1 - P_{12}$, which is then converted into a second digital value which is also memorised, then a second analog value $P_2$ taken by said signal P for a second value $t_2$ of the variable $t$ is compared to said analog value $P_{12}$, to form a second analog difference $P_2 - P_{12}$ which is converted into a third digital value, then said second digital value is subtracted from this third digital value so as to form the digital value of a third difference $\Delta P = P_2 - P_1$ and the digital value of this third difference is divided by the digital value of the difference $\Delta t = t_2 - t_1$ of the values $t_2$ and $t_1$ of said variable $t$.

2. The process of claim 1, characterized in that the formation of said first and second analog differences is accompanied by a high gain amplification.

3. The process of one of claims 1 or 2, characterized in that the succession of the different operations is permanently repeated to give the ratio

$$\frac{\Delta P}{\Delta t}$$

continuously.

4. The process of one of claims 1 to 3, characterized in that the analog electric signal P is representative of the pressure outside or inside an aircraft as a function of the altitude thereof, this altitude being itself a function of time $t$.

5. Device for carrying out the process of one of claims 1 to 4, associated with a generator (1) of the analog electric signal P, and comprising analog-to-digital means for converting said signal P and means for storing several successive values of said signal P, means for calculating the differences between different values of said signal P, characterized in that it comprises a multiplexer (2) with two inputs and one single output provided with means (2c, 2d) for controlled link between each of said inputs (2a, 2b) and said output (2e), one of said inputs (2a) of the multiplexer (2) receiving the signal P from said generator (1); a comparator (3) whose output is connected to the other input (2b) of said multiplexer (2) and of which one input also receives the signal P coming from the generator (1); an analog-to-digital converter (4) whose input is connected to the output (2e) of said multiplexer (2); a first memory (7) intended to receive from said analog-to-digital converter (4), at least the most significant bits of the first digital value representative of the analog value $P_1$; a digital-to-analog converter (8) which is permanently linked to said first memory (7) and of which the output is connected to the other input of said comparator (3); a second memory (6) intended to receive from said analog-to-digital converter (4) said second digital value representative of said first difference $\delta P = P_1 - P_{12}$ and control, clock and calculating means (5) intended selectively to control said means for controlled link of the multiplexer (2), to direct said first digital value towards said first memory (7), to direct said second digital values towards said second memory (6), to substract said second digital value from the third to form the digital value of the third difference $\Delta P = P_2 - P_1$, to form the digital value of the difference $\Delta t = t_2 - t_1$ and to divide the digital values of $\Delta P$ and $\Delta t$.

6. The device of Claim 5, characterized in that said comparator (3) is formed by a high gain differential amplifier, determined by the value of two resistors (9, 10) of which one (10) is mounted between the input, connected to the digital-to-analog converter (8), and the output of said differential amplifier (3), whilst the other (9) of said resistors is mounted in the link between the digital-to-analog converter (8) and said differential amplifier (3).

7. The device of one of Claims 5 or 6, characterized in that the analog-to-digital converter (4) has a greater resolution than the digital-to-analog converter (8).

8. The device of one of Claims 5 to 7, characterized in that said control, clock and calculating means are constituted by a microprocessor (5).

9. Precision vertical speed indicator, characterized in that it comprises, on the one hand, a barometric pressure transducer adapted to convert said pressure into an analog electric signal and, on the other hand, a device of one of Claims 5 to 8.

## Fig.1

## Fig.2

$$\frac{\Delta P}{\Delta t}$$